# EUROPÄISCHE PATENTSCHRIFT

(11) **EP 0 762 934 B1**
(45) Veröffentlichungstag und Bekanntmachung des Hinweises auf die Patenterteilung: **19.08.1998**
(21) Anmeldenummer: 95913894.2
(22) Anmeldetag: 31.03.1995
(51) Int. Cl.: B01J 35/04, F01N 3/28

(54) **WABENKÖRPER AUS BLECHLAGEN AUS VORMATERIAL UNTERSCHIEDLICHER DICKE**
HONEYCOMB BODY MADE LAYERS OF METALLIC MATERIALS HAVING DIFFERENT THICKNESSES
NID D'ABEILLES COMPOSE DE COUCHES DE TOLES D'EPAISSEURS DIFFERENTES

(30) Priorität: 27.05.1994 DE 4418630
(43) Veröffentlichungstag der Anmeldung: 19.03.1997
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9501211
(87) Internationale Veröffentlichungsnummer: WO9532800

(56) Entgegenhaltungen:
- EP-A- 0 217 493
- EP-A- 0 283 220
- WO-A-94/05424
- WO-A-94/22577
- DE-U- 8 801 788
- DE-U- 8 812 924

## Beschreibung

Die Erfindung betrifft einen Wabenkörper eines katalytischen Reaktors mit für ein Fluid durchlässigen Kanälen, insbesondere eines katalytischen Reaktors für Abgase einer Verbrennungskraftmaschine eines Kraftfahrzeuges, aus abwechselnden im wesentlichen glatten und strukturierten, insbesondere gewellten, Blechlagen.

Wabenkörper aus Blechlagen der genannten Art sind beispielsweise aus der WO-89 07 488 oder der EP-A-0217493 bekanntgeworden. Dabei sind glatte und gewellte Bleche stapelweise abwechselnd aufeinandergeschichtet und verschlungen. Einige wenige der Blechlagen sind dicker ausgeführt als die übrigen. Die dickeren Blechlagen dienen zur Erhöhung der Stabilität des Stapels, insbesondere dann, weg dieser in ein Mantelrohr eingefügt wird. Das Bereitstellen einzelner, unterschiedlich dicker Blechlagen in dem Stapel ist jedoch mit einem erhöhten Herstellungsaufwand verbunden.

In bestimmten Anwendungen eines Wabenkörpers ist das Bereitstellen von einzelnen dickeren Blechlagen zur Erhöhung der Stabilität nicht erforderlich. Weiterhin ist es grundsätzlich vorteilhaft, zur Reduzierung der Masse und der Kosten des Wabenkörpers, die Blechlagen so dünn wie möglich zu machen. Dieses Ziel steht jedoch im Gegensatz zum Ziel einer hohen Stabilität des Wabenkörpers und einer Langzeitbeständigkeit gegen Korrosion.

Es ist das Ziel der Erfindung, einen Wabenkörper mit ausreichender Stabilität und möglichst geringer Masse anzugeben, der zumindest unter nicht extremen Bedingungen auch genügend beständig gegen Korrosion ist.

Das Ziel der Erfindung wird erreicht mit einem Wabenkörper mit den Merkmalen des Anspruchs 1. Vorteilhafte Ausgestaltungen dieses Wabenkörpers sind in den Unteransprüchen angegeben.

Ein Wabenkörper der Erfindung ist aus abwechselnden im wesentlichen glatten und strukturierten Blechlagen aufgebaut. Die strukturierten Blechlagen sind vorzugsweise gewellt. Durch die abwechselnde Anordnung von im wesentlich glatten und strukturierten Blechlagen sind Kanäle gebildet, die von einem Fluid durchströmt werden können. Der Wabenkörper eignet sich insbesondere als ein katalytischer Reaktor für Abgase einer Verbrennungskraftmaschine eines Kraftfahrzeuges. Die Wände der Waben des Wabenkörpers tragen dazu eine katalytische Beschichtung, die von den Abgasen der Verbrennungskraftmaschine angeströmt wird. Die strukturierten Blechlagen sind um mindestens 0,005 mm dünner als die im wesentlichen glatten Blechlagen. Die im wesentlichen glatten Blechlagen haben eine Dicke von 0,04 mm bis 0,06 mm und besonders bevorzugt etwa 0,05 mm. Die strukturierten Blechlagen haben eine Dicke von 0,025 mm bis 0,045 mm, besonders bevorzugt etwa 0,04 mm. Es ist bevorzugt, einen Dickenunterschied von 0,01 mm einzuhalten.

Gewöhnlich haben alle Blechlagen eines Wabenkörpers eine bestimmte, gleiche Dicke typischerweise etwa 0,05 mm. Zur Reduzierung der Masse des Waberkörpers ist bei dieser Erfindung die Dicke aller strukturierten Blechlagen reduziert worden. Da insgesamt die gestreckte Lange der strukturierten Blechlagen wesentlich größer als die Länge der im wesentlichen glatten Blechlagen ist, kann dadurch eine bedeutende Material- und damit Kostenersparnis erzielt werden. Da weiterhin die Stabilität der Struktur hauptsächlich durch die im wesentlichen glatten Blechlagen bestimmt ist, wird die Stabilität nur unwesentlich und in akzeptabler Weise verringert, insbesondere in axialer Richtung.

Es ist bevorzugt, daß die Anzahl von im wesentlichen glatten und strukturierten Blechlagen in etwa gleich ist. Das heißt, strukturierte Blechlagen und im wesentlichen glatte Blechlagen wechseln einander ab.

Besonders vorteilhaft ist die Erfindung, wenn die strukturierten Blechlagen transversal zur Hauptstrukturierung eine zusätzliche Strukturierung aufweisen, wie sie beispielsweise in der EP-B1 0 454 712 beschrieben ist. Diese zusätzliche Strukturierung hat eine wesentlich kleinere Amplitude als die Hauptstrukturierung und dient zur Verwirbelung eines durch den Wabenkörper strömenden Fluids, um den Kontakt des Fluids mit den Wänden der Waben zu verbessern. Zur Herstellung eines mit einer solchen transversalen Strukturierung versehenen Bleches bestimmte Breite muß das Ausgangsmaterial eine etwas größere Breite haben. Für einen Wabenkörper, bei dem die strukturierten Blechlagen eine transversale Struktur haben, die im wesentlichen glatten Blechlagen aber nicht, müssen daher ohnehin verschieden breite Ausgangsmaterialien für glatte und gewellte Blechlagen eingesetzt werden, so daß die Verwendung zusätzlich unterschiedlich dicker Breite keinen zusätzlich logistischen Aufwand erfordert. Die dünnen Bleche lassen sich auch leichter transversal strukturieren und wellen, während die dickeren glatten Blechlagen die Stabilität des Wabenkörpers gewährleisten.

Es ist weiterhin bevorzugt, die Blechlagen so anzuordnen, daß sie umeinander gewunden sind. Durch diese Maßnahme wird die Stabilität des Wabenkörpers erhöht, ohne gleichzeitig den Materialaufwand zu erhöhen. Dabei wird besonders bevorzugt, die Blechlagen S-förmig umeinander zu winden. Ein so gestalteter Wabenkörper kann besonders vorteilhaft in ein rundes oder ovales Mantelrohr eingefügt werden.

Alternativ dazu können die Blechlagen in einem Stapel angeordnet sein. Dies hat den Vorteil des besonders einfachen Herstellungsverfahrens beim Fügen des Wabenkörpers in ein Mantelrohr.

Es ist weiterhin besonders bevorzugt, daß die im wesentlichen glatten Blechlagen eine leichte Strukturierung mit wesentlich geringerer Strukturierungsamplitude haben als die strukturierten Blechlagen. Eine solche Strukturierung der im wesentlichen glatten Blechlagen hat im wesentlichen die gleiche Orientierung wie die Strukturierung der strukturierten Blechlagen. Diese Maßnahme erhöht die Elastizität des Wabenkörpers, wobei aufgrund der kleinen Strukturierungsamplitude im wesentlichen der Vorteil der Materialersparnis und der Stabilität bestehen bleibt. Die Strukturierung ist vorzugsweise ein Wellung, deren Periodizität an die Periodizität der strukturierten Blechlagen angepaßt sein kann.

Weitere Vorteile, Merkmale und Anwendungsmöglichkeiten der vorliegenden Erfindung ergeben sich aus der nachfolgenden Beschreibung eines Ausführungsbeispiels in Verbindung mit der Zeichnung.

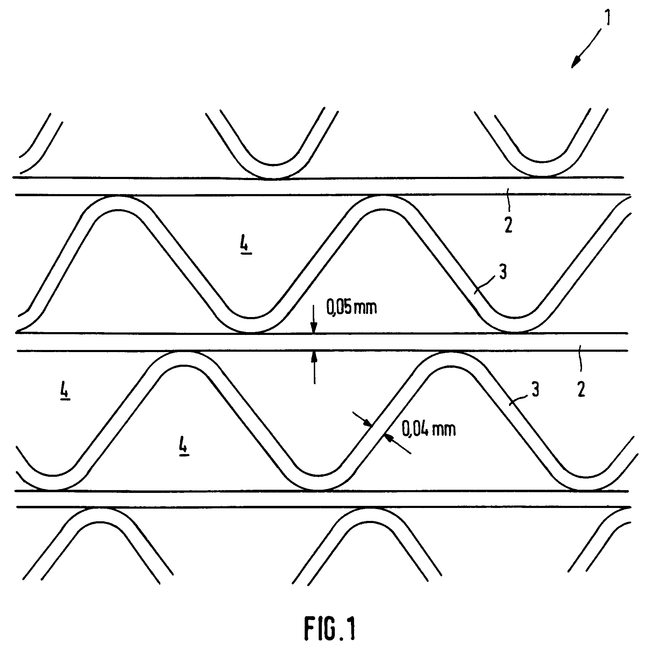

Fig. 1 der Zeichnung zeigt einen Ausschnitt aus dem Querschnitt eines Wabenkörpers der Erfindung.

In der Figur ist der Ausschnitt eines Querschnitts eines Stapels 1 von Blechlagen 2, 3 gezeigt. Der Stapel 1 besteht aus im wesentlichen glatten Blechlagen 2 und aus gewellten Blechlagen 3, die abwechselnd übereinander angeordnet sind. Durch diese Anordnung entstehen zwischen den glatten Blechlagen 2 und den gewellten Blechlagen 3 Kanäle 4, durch die ein Fluid strömen kann. Die Strömungsrichtung ist dabei im wesentlichen senkrecht zur Zeichenebene. In dem bevorzugten Ausführungsbeispiel der Erfindung beträgt die Dicke aller glatten Blechlagen 2 in etwa 0,05 mm und die Dicke aller gewellten Blechlagen 3 etwa 0,04 mm.

Die gestreckte Gesamtlänge der geweliten Bleche 3 ist etwa doppelt so groß wie die Gesamtlänge der glatten Blechlagen 2. Bei einer Reduzierung der Dicke der gewellten Blechlagen 3 um ca. 20% ergibt sich daraus eine Gewichtsersparnis des gesamten Wabenkörpers von etwa 13%. Die katalytisch aktive Oberfläche des Wabenkörpers, d. h. die Gesamtoberfläche der Wabenwände, bleibt dabei im wesentlichen konstant. Im günstigsten Fall kann sogar das Bauvolumen bei gleichbleibender katalytisch aktiver Oberfläche noch verringert werden. Durch eine leichte Wellung der glatten Blechlagen 2 kann die Elastizität des Wabenkörpers erhöht werden, wobei das mögliche Ausmaß einer Materialersparnis nur geringfügig abnimmt.

Wabenkörper mit erfindungsgemäß verringerter Dicke der strukturierten Bleche, insbesondere in Verbindung mit einer transversalen Struktur dieser Bleche, eignen sich besonders für Anwendungen, bei denen keine extremen Korrosionsbeanspruchungen auftreten. Solche Bedingungen liegen z. B. bei Abgaskatalysatoren in den USA wegen der dortigen Geschwindigkeitsbegrenzungen für Kraftfahrzeuge vor.

## Patentansprüche

1. Wabenkörper eines katalytischen Reaktors mit für ein Fluid durchlässigen Kanälen (4), insbesondere eines katalytischen Reaktors für Abgase einer Verbrennungskraftmaschine eines Kraftfahrzeugs, aus abwechselnden in wesentlichen glatten (2) und strukturierten, insbesondere gewellten, (3) Blechlagen, wobei mindestens eine Blechlage aus einem Vormaterial größerer Dicke als die übrigen Lagen besteht, alle glatten (2) Blechlagen untereinander aus gleichen und alle strukturierten (3) Blechlagen untereinander aus gleichen und die glatten (2) und die strukturierten (3) Blechlagen aus Vormaterialien mit unterschiedlichen Dicken hergestellt sind,
**dadurch gekennzeichnet,** daß
alle glatten Blechlagen (2) eine Dicke von 0,04 mm bis 0,06 mm, vorzugsweise 0,05 mm, und die strukturierten Blechlagen (3) eine Dicke von 0,025 mm bis 0,045 mm, vorzugsweise 0,04 mm, haben; und
daß alle strukturierten Blechlagen (3) um mindestens 0,005 mm, vorzugsweise 0,01 mm, dünner als die glatten Blechlagen (2) sind.

2. Wabenkörper nach Anspruch 1, dadurch gekennzeichnet, daß die strukturierten Blechlagen (3) transversal zur Strukturierung eine zusätzliche Mikrostrukturierung aufweisen.

3. Wabenkörper nach Anspruch 1 oder 2, dadurch gekennzeichnet, daß die Zahl strukturierter (3) und glatter (2) Blechlagen in etwa gleich ist.

4. Wabenkörper nach einem der vorhergehenden Ansprüche, dadurch gekennzeichnet, daß die Blechlagen (2, 3) umeinander gewunden sind, um den Umfangsquerschnitt dem Innenquerschnitt eines Mantelrohrs anzupassen, in das der Wabenkörper montiert werden soll.

5. Wabenkörper nach Anspruch 4, dadurch gekennzeichnet, daß die Blechlagen (2, 3) S-förmig umeinander gewunden sind.

6. Wabenkörper nach einem der vorhergehenden Ansprüche, dadurch gekennzeichnet, daß die Blechlagen (2, 3) in einem Stapel (1) angeordnet sind.

7. Wabenkörper nach einem der vorhergehenden Ansprüche, dadurch gekennzeichnet, daß zummindest ein Teil der glatten Blechlagen (2) eine Wellung mit wesentlich geringerer Wellungsamplitude hat als die strukturierten Blechlagen (3).

## Claims

1. A honeycomb body of a catalytic reactor with passages (4) through which a fluid can pass, in particular a catalytic reactor for exhaust gases of an internal combustion engine of a motor vehicle, comprising alternate substantially smooth (2) and structured, in particular corrugated, (3) sheet layers, wherein at least one sheet layer comprises a starting material of greater thickness than the other layers, all smooth sheet layers (2) amongst each other are produced from identical starting materials and all structured sheet layers (3) amongst each other are produced from identical starting materials and the smooth (2) and the structured (3) sheet layers are produced from starting materials of different thicknesses,
characterised in that
all smooth sheet layers (2) are of a thickness of 0.04 mm to 0.06 mm, preferably 0.05 mm, and the structured sheet layers (3) are of a thickness of 0.025 mm to 0.045 mm, preferably 0.04 mm; and
all structured sheet layers (3) are thinner than the smooth sheet layers (2) by at least 0.005 mm, preferably 0.01 mm.

2. A honeycomb body according to claim 1 characterised in that the structured sheet layers (3) have an additional microstructuring transversely with respect to the structuring.

3. A honeycomb body according to claim 1 or claim 2 characterised in that the number of structured (3) and smooth (2) sheet layers is approximately equal.

4. A honeycomb body according to one of the preceding claims characterised in that the sheet layers (2, 3) are wound around each other in order to adapt the peripheral cross-section to the internal cross-section of a tubular casing into which the honeycomb body is to be fitted.

5. A honeycomb body according to claim 4 characterised in that the sheet layers (2, 3) are wound around each other in an S-shape.

6. A honeycomb body according to one of the preceding claims characterised in that the sheet layers (2, 3) are arranged in a stack (1).

7. A honeycomb body according to one of the preceding claims characterised in that at least a part of the smooth sheet layers (2) has a corrugation with a substantially smaller corrugation amplitude than the structured sheet layers (3).

## Revendications

1. Corps alvéolaire d'un réacteur catalytique comportant des canaux (4) pouvant être traversés par un fluide, notamment d'un réacteur catalytique destiné aux gaz d'échappement d'un moteur à combustion interne d'un véhicule automobile, constitué de couches alternées de tôles sensiblement lisses (2) et de couches de tôles structurées, en particulier ondulées (3), au moins une couche de tôles étant constituée d'un matériau de départ d'une épaisseur plus importante que les autres couches, toutes les couches de tôles lisses (2) et toutes les couches de tôles structurées (3) étant fabriquées avec le même matériau de départ, et les couches de tôles lisses (2) et structurées (3) étant fabriquées avec des matériaux de départ de différentes épaisseurs,
caractérisé en ce que
toutes les couches de tôles lisses (2) ont une épaisseur de 0,04 mm à 0,06 mm, de préférence de 0,05 mm, et en ce que les couches de tôles structurées (3) ont une épaisseur de 0,025 mm à 0,045 mm, de préférence de 0,04 mm ; et
toutes les couches de tôles structurées (3) sont plus minces que les couches de tôles lisses (2) d'au moins 0,005 mm, de préférence de 0,01 mm.

2. Corps alvéolaire selon la revendication 1, caractérisé en ce que les couches de tôles structurées (3) comportent une microstructure supplémentaire transversalement à la structuration.

3. Corps alvéolaire selon la revendication 1 ou 2, caractérisé en ce que le nombre de couches de tôles structurées (3) et de couches de tôles lisses (2) est approximativement identique.

4. Corps alvéolaire selon l'une quelconque des revendications précédentes, caractérisé en ce que les couches de tôles (2, 3) sont enroulées les unes autour des autres dans le but d'adapter la section transversale périphérique à la section transversale intérieure d'un tube de protection dans lequel doit être monté le corps alvéolaire.

5. Corps alvéolaire selon la revendication 4, caractérisé en ce que les couches de tôles (2, 3) sont enroulées en forme de S les unes autour des autres.

6. Corps alvéolaire selon l'une quelconque des revendications précédentes, caractérisé en ce que les couches de tôles (2, 3) sont disposées en une pile (1).

7. Corps alvéolaire selon l'une quelconque des revendications précédentes, caractérisé en ce qu'une partie au moins des couches de tôles lisses (2) comporte une ondulation dont l'amplitude d'ondulation est sensiblement inférieure à celle des couches de tôles structurées (3).
